# EUROPÄISCHE PATENTSCHRIFT

(11) **EP 0 377 201 B1**
(45) Veröffentlichungstag und Bekanntmachung des Hinweises auf die Patenterteilung: **29.09.1993**
(21) Anmeldenummer: 89123943.6
(22) Anmeldetag: 27.12.1989
(51) Int. Cl.: F16B 39/30

(54) **Selbstsichernde Schraubverbindung**
Self locking screw connection
Raccord à vis autobloquant

(30) Priorität: 31.12.1988 DE 3844477
(43) Veröffentlichungstag der Anmeldung: 11.07.1990
(73) Patentinhaber: ITW-ATECO GmbH, D-22844 Norderstedt (DE)
(72) Erfinder: Jonatzke, Volker, D-5860 Iserlohn (DE)
(74) Vertreter: Patentanwälte Hauck, Graalfs, Wehnert, Döring, Siemons

(56) Entgegenhaltungen:
- DE-A- 1 750 206
- US-A- 2 581 690
- PRODUCT ENGINEERING, Band 50, Nr. 4, April 1979, Seiten 55-59; "World of self-locking screw grows"

## Beschreibung

Die vorliegende Erfindung betrifft eine selbstsichernde Schraubverbindung nach dem Oberbegriff des Anspruchs 1.

Solche selbstsichernden Schraubverbindungen sind bekannt. Sie erzeugen den zur Sicherung der Schraubverbindung erforderlichen Reibschluß durch eine mittels aufgebrachtem Drehmoment herbeigeführte Verspannung. Dazu werden in der einen Ausführungsart solcher Verbindungen unterschiedliche Gewindeformen auf dem Bolzen ausgeführt, wobei vorzugsweise ein Abschnitt mit Regelgewinde am freien Ende und ein Abschnitt mit Sicherungsgewinde daran anschließend angeordnet sind. Solche Ausführungen sind in der DE-OS 25 27 557, DE-AS 23 65 132, DE-OS 26 45 519, DE-OS 27 14 180, DE-AS 17 50 206 oder US-PS 2 581 690 beschrieben.

Das Sicherungsgewinde weist in den oben angeführten Schriften eine vom Regelgewinde abweichende geometrische Form auf, wobei zum Beispiel Abweichungen in der Ganghöhe in der Form des Gewindegrundes, des Flankendurchmessers oder des Flankenwinkels vorgenommen werden.

Ausführungen mit zwei unterschiedlichen Gewindearten auf einem Bolzen sind naturgemäß schwierig herzustellen und entsprechend kostenaufwendig. Sie benötigen Spezialwerkzeuge sowohl bei spanender als auch bei spanloser Fertigung. Außerdem ist die Position der Mutter auf dem Bolzen in verspanntem Zustand durch die Längenmaße der beiden Gewindeabschnitte festgelegt, so daß bei Befestigung verschieden dicker flächiger Körper durch eine solche Schraubverbindung eine große Anzahl von unterschiedlich ausgeführten Spezialbolzen vorgehalten werden müssen, was wiederum die Lagerhaltung verteuert. Außerdem kann bei Gewindestiften die Mutter nur einseitig aufgeschraubt werden. Diese Ausführungen haben überdies den Nachteil, daß die Schraubverbindung nur im Bereich des Sicherungsabschnittes trägt. Dies gilt besonders bei abweichenden Flankenwinkeln, auch wenn sich der Sicherungsabschnitt über eine größere Bolzenlänge erstreckt.

Eine andere Ausführungsart selbstsichernder Schraubverbindungen weist ein einheitliches Gewinde auf dem Bolzen auf, wodurch die zuletzt genannten Nachteile der ersten Ausführungsart entfallen.

Solche Schraubverbindungen sind in der DE-OS 26 25 997, DE-OS 29 03 845 und DE-OS 36 01 389 beschrieben.

Die bekannten Schraubverbindungen weisen einige Nachteile auf.

Die DE-OS 26 25 997 beschreibt ein Sicherheitsgewinde, wobei Schrauben und Mutterngewinde unterschiedliche Steigungswinkel aufweisen. Zur Herstellung von Gewinden mit Steigungswinkeln, die von der Norm abweichen, ist in jedem Fall der Einsatz von Sonderwerkzeugen und/oder Sonderprogrammen auf Werkzeugmaschinen erforderlich, was zu höherem Zeitaufwand und höheren Kosten gegenüber einer Herstellung von Normgewinden führt.

Die DE-OS 29 03 845 beschreibt eine Schraubverbindung mit einem Sicherungsgewinde, das unterschiedliche Flankenwinkel, einen abgeflachten Gewindekern, abweichende Gewindetiefe und einen Längsabstand zwischen den Gewindeflanken im Bereich der Gewindespitzen bzw. des Gewindekerns aufweist.

Es liegt auf der Hand, daß die Herstellung eines so weit von der Norm abweichenden Gewindes noch in weit größerem Maße als in der zuvor genannten Druckschrift den Einsatz aufwendiger Werkzeuge und Herstellungsverfahren erfordert.

Die DE-OS 36 01 389 beschreibt ein Verbindungselement, bei dem das Schraubengewinde eine abweichende Steigung aufweist. Weiterhin ist zwischen den beiden Maschinenelementen Schraube/Mutter eine solche Einschraubtiefe vorzusehen, daß das erforderliche Reibmoment entsteht.

Auch in diesem Falle treffen die mit dem Einsatz von Sonderwerkzeugen verbundenen Nachteile zu, wobei zusätzlich die Einschraubtiefe und damit die Bauhöhe der Mutter als ein die Verwendungsmöglichkeit einschränkendes Merkmal genannt wird.

Aufgabe der vorliegenden Erfindung ist demnach, eine selbstsichernde Schraubverbindung zu erstellen, die einfach und kostengünstig herstellbar und ohne Einschränkung einsetzbar ist.

Die Aufgabe wird durch die Merkmale des kennzeichnenden Teils des Anspruchs 1 gelöst.

Der Vorteil der erfindungsgemäßen Schraubverbindung liegt darin, daß die Verbindung von Mutter und Bolzen spielfrei ist, so daß keine Relativbewegung im Gewinde entsteht. Dadurch ist die Verbindung selbstsichernd. Diese Selbstsicherung kann auch bei hochfesten Verbindungen eingesetzt werden, weil alle Gewindeflanken genauso tragen wie bei einem Regelgewinde.

Ein weiterer Vorteil der erfindungsgemäßen Schraubverbindung liegt in der einfachen Herstellung.

Es können wahlweise der Bolzen mit Regelgewinde und die Mutter mit Sicherungsgewinde oder die Mutter mit Regelgewinde und der Bolzen mit Sicherungsgewinde hergestellt werden.

Soll der Bolzen mit Regelgewinde hergestellt werden, so werden der Mutteraußendurchmesser und Kerndurchmesser auch nach den Regelgewindemaßen hergestellt, nur wird der Flankendurchmesser verkleinert. In einer Ausgestaltung der Erfindung ist vorgesehen, daß bei Verwendung eines Bolzens mit Regelgewinde der Flankendurchmesser der Mutter das gleiche Maß aufweist wie der Flankendurchmesser des Bolzens, insbesondere das Kleinstmaß des Flankendurchmessers des Regelgewindes vom Bolzen.

Soll die Mutter mit Regelgewinde und der Bolzen mit Sicherungsgewinde hergestellt werden, so werden Bolzenaußen- und Kerndurchmesser auch nach den Regelgewindemaßen hergestellt, nur der Flankendurchmesser wird vergrößert. In einer Ausgestaltung der Erfindung ist vorgesehen, daß hierbei für den Flankendurchmesser des Bolzens das gleiche Maß gewählt wird wie für den Flankendurchmesser der Mutter, insbesondere das Größtmaß des Flankendurchmessers des Regelgewindes von der Mutter.

Natürlich ist das Abmaß des Flankendurchmessers des Sicherungsgewindes weitgehend frei wählbar und damit der Anwendung anpaßbar.Durch die Wahl der Toleranzlage können somit das Einschraubmoment und die Vorspannkraft beeinflußt werden.

Die Produktion kann durch Überwachung der Durchmesser einfach kontrolliert werden.

Die Werkstoffe von Schrauben und Muttern der erfindungsgemäßen Schraubverbindung können die gleichen wie beim Regelgewinde sein. Es ist natürlich möglich, abweichende Materialpaarungen vorzusehen, wenn das aus besonderen Anwendungsgründen benötigt wird.

Die Flanken zwischen Bolzengewinde und Mutterngewinde können ein Flankenspiel kleiner oder gleich Null aufweisen, wobei ein Flankenspiel kleiner Null die Sicherung weiter verbessert.

Bei einer weiteren Ausgestaltung weicht eine nicht tragende Flankenseite des Bolzengewindes und/oder des Mutterngewindes im Längsschnitt von einer Geraden ab. Hierdurch wird erreicht, daß diese Flankenseite auf einer relativ geringen Fläche die Gegenflanke berührt und werden die Reibverhältnisse verbessert, ohne die Tragfähigkeit der Gewindeverbindung zu beeinträchtigen.Bevorzugt ist die im Längsschnitt von einer Geraden abweichende Flankenseite im Längsschnitt konvex ausgebildet, wobei die Flanke etwa im Bereich des Flankendurchmessers die Gegenflanke berührt.

Nunmehr wird die Erfindung anhand der Darstellungen näher erläutert.
- Fig. 1: ist ein schematisch dargestellter Schnitt durch ein Regelgewinde einer Schrauben-/Mutternverbindung.
- Fig. 2: ist ein schematisch dargestellter Schnitt durch ein erfindungsgemäßes Gewinde einer Schrauben-/Mutternverbindung.
- Fig. 3: ist ein schematisch dargestellter Schnitt durch ein anderes Ausführungsbeispiel eines erfindungsgemäßen Gewindes einer Schrauben-/Mutternverbindung.

Bevor auf die in der Zeichnung dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung ist.

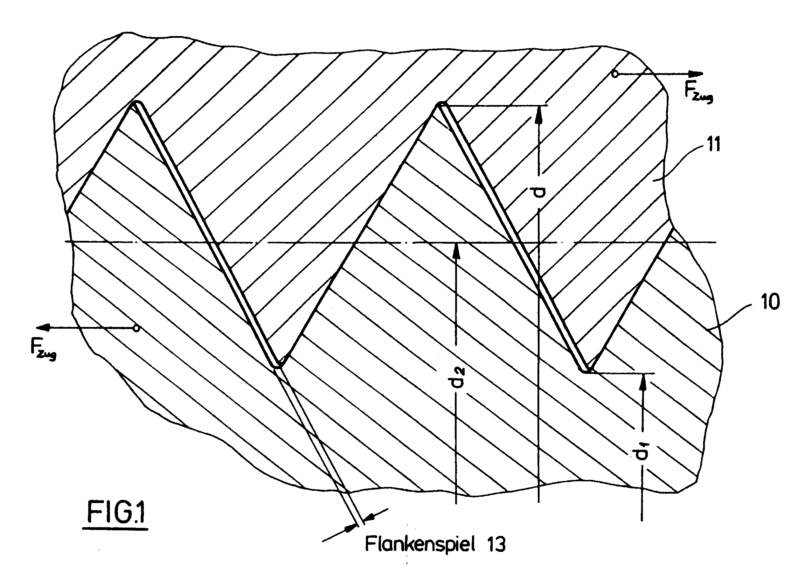

Aus Fig. 1 ist ersichtlich, daß ein Regelgewinde, zum Beispiel ein metrisches Gewinde, nach DIN einen Außendurchmesser d, einen Flankendurchmesser d2 und einen Kerndurchmesser d1, bezogen auf das Bolzengewinde eines Bolzens 10, aufweist. Eine zugehörige Mutter 11 weist ebenfalls Außen-, Flanken- und Kerndurchmesser auf, die nicht dargestellt sind, da sie zum allgemeinen Stand der Technik gehören. Im verspannten Zustand der Schraubverbindung aus Bolzen 10 und Mutter 11 greifen durch Pfeile "FZug" dargestellte Zugkräfte an der Verbindung an und bringen die belasteten Gewindeflanken zur Anlage, wobei auf der unbelasteten Seite der Gewindeflanken ein Flankenspiel 13 auftritt. Die geometrischen Abmessungen d, d1, d2 sind für genormte Schraubverbindungen vorgeschrieben, wodurch das entsprechende Flankenspiel sichergestellt ist. Ein nach einer Norm beschriebenes Gewinde wird im folgenden Text als Regelgewinde bezeichnet. Es kann sich dabei bei DIN-Normen um metrisches Gewinde, metrisches Feingewinde, Whitworthgewinde, Trapezgewinde oder ein sonstiges Gewinde handeln.

Natürlich ist der Begriff Regelgewinde auch auf Normen anderer Nationen anwendbar.

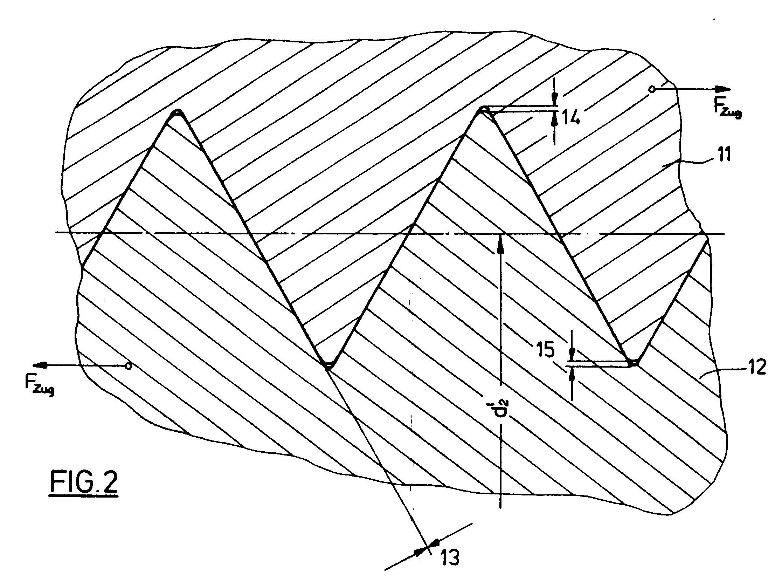

In Fig. 2 weist eine erfindungsgemäße Schraubverbindung den Schraubenbolzen 12 und die zugehörige Mutter 11 auf, wobei der Flankendurchmesser d2′ erfindungsgemäß von dem Flankendurchmesser d2 eines Regelgewindes abweicht. Das Maß des Flankendurchmessers d2′ wird so gewählt, daß sich in unbelastetem und natürlich auch belastetem Zustand der Schraubverbindung ein Flankenspiel 13 von Null ergibt. Ein Kopfspiel 14 und ein Fußspiel 15 der Schraubverbindung entspricht bei der erfindungsgemäßen Ausführung im wesentlichen dem eines Regelgewindes. Natürlich ist auch eine abweichende Abmessung vom Regelgewinde möglich, es muß jedenfalls sichergestellt sein, daß ein Kopf- und Fußspiel von ausreichender Abmessung vorliegt.

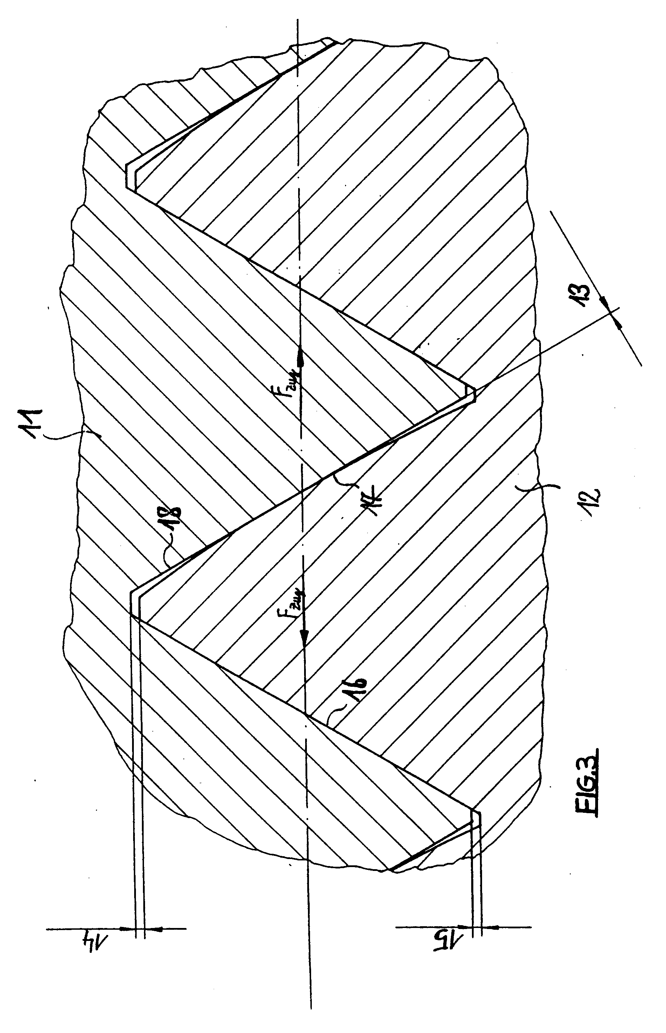

Bei einem weiteren Ausführungsbeispiel einer erfindungsgemäßen Schraubverbindung gemäß Fig. 3 stimmt die Mutter 11 mit der zuvor beschriebenen Mutter überein. Der Schraubenbolzen 12 hingegen hat zwei ungleiche Gewindeflanken, wobei eine beim Anlegen einer Zugkraft F_{zug} tragende Flanke 16 im Längsschnitt gerade ausgebildet und eine nicht tragende Flanke 17 im Längsschnitt mit einem Radius, d.h. konvex geformt ist. Die nicht tragende Flanke 17 liegt somit an einer Gegenflanke 18 der Mutter 11 auf, so daß sich in unbelastetem und im belasteten Zustand der Schraubverbindung ein Flankenspiel 13 von Null ergibt. Auch sind ein Kopfspiel 14 und ein Fußspiel 15 entsprechend der Schraubverbindung gemäß Fig. 2 vorgesehen.

Fertigungstoleranzen von Mutter 11 und Bolzen 12 werden bei dieser Schraubverbindung durch Materialverdrängung in die Spalte zwischen nicht tragender Flanke 17 und Gegenflanke 18 ausgeglichen, so daß gleichmäßige Reibverhältnisse erzielt werden.

## Patentansprüche

1. Selbstsichernde Schraubverbindung mit einem Gewindebolzen und einer zugehörigen Mutter,dadurch gekennzeichnet, daß zwischen dem Bolzengewinde (12) und dem Mutterngewinde (11) über die gesamte Gewindelänge ein Flankenspiel (13) von Null vorgesehen ist, und daß der Flankendurchmesser (d2') des Bolzengewindes (12) und der Flankendurchmesser des Mutterngewindes (11) mit übereinstimmendem Maß ausgeführt sind.

2. Schraubverbindung nach Anspruch 1, dadurch gekennzeichnet, daß Außendurchmesser (d) und Kerndurchmesser (d1) des Bolzengewindes (12) und Außen- und Kerndurchmesser des zugehörigen Mutterngewindes den Maßen eines Regelgewindes entsprechen.

3. Schraubverbindung nach Anspruch 1 oder 2, dadurch gekennzeichnet, daß das Mutterngewinde (11) als Regelmutterngewinde und der Flankendurchmesser (d2') des Bolzengewindes (12) mit dem Maß des Flankendurchmessers des zugehörigen Regelmutterngewindes (11) ausgeführt sind oder das Bolzengewinde (12) als Regelbolzengewinde und der Flankendurchmesser des Mutterngewindes (11) mit dem Maß des Flankendurchmessers des zugehörigen Regelbolzengewindes (12) ausgeführt sind.

4. Schraubverbindung nach einem der Ansprüche 1 bis 2, dadurch gekennzeichnet, daß die Flanken zwischen Bolzengewinde (12) und Mutterngewinde (11) ein Flankenspiel kleiner oder gleich 0 aufweisen.

5. Schraubverbindung nach einem der Ansprüche 1 bis 4, dadurch gekennzeichnet, daß ein Kopfspiel (14) bzw. ein Fußspiel (15) vorgesehen ist, vorzugsweise das eines Regelgewindes.

6. Schraubverbindung nach einem der Ansprüche 1 bis 5, dadurch gekennzeichnet, daß eine nicht tragende Flankenseite (17) des Bolzengewindes (12) und/oder des Mutterngewindes (11) im Längsschnitt von einer Geraden abweicht.

7. Schraubverbindung nach Anspruch 6,dadurch gekennzeichnet, daß die im Längsschnitt von einer Geraden abweichende Flankenseite (17) im Längsschnitt konvex ausgebildet ist.

## Claims

1. A self-locking screw connection comprising a screw bolt and an associated nut, characterized in that a backlash (13) of substantially zero is provided between the thread (12) of the bolt and the female thread (11) of the nut along the complete length of the thread, and that the pitch diameter (d2') of the thread (12) of the bolt and the pitch diameter of the female thread (11) of the nut are formed with a coinciding dimension.

2. The screw connection of claim 1, characterized in that the outer diameter (d) and the root diameter (d1) of the thread (12) of the bolt and the outer diameter and root diameter of the associated female thread correspond to the dimensions of a standard thread.

3. The screw connection of claim 1 or 2, characterized in that the female thread (11) of the nut is defined by a standard female thread and the pitch diameter (d2') of the thread (12) of the bolt is formed with the dimension of the pitch diameter of the associated standard female thread (11) or, respectively, the thread (12) of the bolt is defined by a standard thread of the bolt and the pitch diameter of the female thread (11) is formed with the dimension of the pitch diameter of the associated standard thread (12) of the bolt.

4. The screw connection of one of claims 1 or 2, characterized in that the sides between the threads (12) of the bolt and the female thread (11) include a backlash of zero or less.

5. The screw connection of one of claims 1 to 4, characterized in that a tip clearance (14) or a root clearance (15) is provided preferably corresponding to that of a standard thread.

6. The screw connection of one of claims 1 to 5, characterized in that a non bearing side (17) of the thread (12) of the bolt and/or the female thread (12) taken in a longitudinal section differs from a line.

7. The screw connection of claim 6, characterized in that the side (17) differing from a straight line in the longitudinal section is shaped to include a convex configuration in the longitudinal section.

## Revendications

1. Assemblage vissé autobloquant comportant un boulon et un écrou correspondant, caractérisé en ce qu'entre le filetage du boulon (12) et le filetage de l'écrou (11) il est prévu, sur toute la longueur du filetage, un jeu (13) des flancs égal à zéro et en ce que le diamètre des flancs (d2') du filetage du boulon (12) et le diamètre des flancs du filetage de l'écrou (11) sont réalisés avec des cotes concordantes.

2. Assemblage vissé selon la revendication 1, caractérisé en ce que le diamètre extérieur (d) et le diamètre du noyau (d1) du filetage du boulon (12) et le diamètre extérieur et le diamètre du noyau du filetage correspondant de l'écrou correspondent aux cotes d'un filetage normalisé.

3. Assemblage vissé selon la revendication 1 ou 2, caractérisé en ce que le filetage de l'écrou (11) est réalisé sous la forme d'un filetage d'écrou normalisé et le diamètre des flancs (d2') du filetage du boulon (12) est réalisé avec la cote du diamètre des flancs du filetage d'écrou normalisé (11) correspondant ou le filetage du boulon (12) est réalisé sous la forme d'un filetage de boulon normalisé et le diamètre des flancs du filetage de l'écrou (11) est réalisé avec la cote du diamètre des flancs du filetage de boulon normalisé (12) correspondant.

4. Assemblage vissé selon l'une des revendications 1 et 2, caractérisé en ce que les flancs présentent entre le filetage du boulon (12) et le filetage de l'écrou (11) un jeu inférieur ou égal à zéro.

5. Assemblage vissé selon l'une des revendications 1 à 4, caractérisé en ce qu'il est prévu un jeu (14) au sommet ou un jeu (15) à la base, de préférence le jeu d'un filetage normalisé.

6. Assemblage vissé selon l'une des revendications 1 à 5, caractérisé en ce qu'un côté de flanc (17) non porteur du filetage du boulon (12) et/ou du filetage de l'écrou (11) est différent d'une droite, en coupe longitudinale.

7. Assemblage vissé selon la revendication 6, caractérisé en ce que le côté de flanc (17), différent d'une droite en coupe longitudinale, est convexe en coupe longitudinale.
